Europäisches Patentamt

European Patent Office

Office européen des brevets

(11) Numéro de publication : **0 338 875 B1**

# (12) FASCICULE DE BREVET EUROPEEN

(45) Date de publication du fascicule du brevet :
**20.05.92 Bulletin 92/21**

(51) Int. Cl.$^5$ : **A21D 2/02, A21D 8/02, A21D 8/04, A21D 10/00**

(21) Numéro de dépôt : **89400810.1**

(22) Date de dépôt : **22.03.89**

(54) **Procédé de fabrication d'un pain, pâte à pain et poolisch pour la mise en oeuvre dudit procédé et pain obtenu par cette miseen oeuvre.**

(30) Priorité : **22.03.88 FR 8803735**

(43) Date de publication de la demande :
**25.10.89 Bulletin 89/43**

(45) Mention de la délivrance du brevet :
**20.05.92 Bulletin 92/21**

(84) Etats contractants désignés :
**AT BE CH DE ES GB IT LI LU**

(56) Documents cités :
**EP-A- 0 233 126
DE-A- 2 909 571
FR-A- 2 426 413
US-A- 4 107 341
THE BAKERS DIGEST, vol. 47, no. 3, juin 1973, pages 39-44; G.W. TRUM: "Significance of fermentation reactions in continuousfermentation systems"**

(73) Titulaire : **Lescure, Joel Pascal
21, rue du Plantier
F-24000 Périgueux (FR)**

(72) Inventeur : **Lescure, Joel Pascal
21, rue du Plantier
F-24000 Périgueux (FR)**
Inventeur : **Stieffel, Alain
2, rue de l'Arc
F-24000 Périgueux (FR)**

(74) Mandataire : **DEGRET, Jacques
Cabinet Degret 24, place du Général Catroux
F-75017 Paris (FR)**

## Description

La présente invention est relative à un procédé de fabrication d'un pain ; elle a également pour objet une pâte à pain obtenue par mélangeage avec une poolisch préparée au préalable et une poolisch (ou levain liquide) pour la mise en oeuvre dudit procédé, ainsi que le pain de consommation courante obtenu à partir de cette pâte, par la mise en oeuvre dudit procédé.

On sait que le pain est un aliment fait de farine additionnée d'eau, de levure et de sel, la pâte composée des quatre constituants précités étant pétrie, puis fermentée, puis cuite au four.

La pâte la plus commune, encore dite "bâtarde", utilisée pour la fabrication d'un pain traditionnel comprend en poids, pour 100 kg de farine, de 58 à 60 kg d'eau, environ 1,8 kg de sel et de 2,4 à 3 kg de levure.

Outre cette pâte bâtarde, il est aussi connu d'utiliser deux autres espèces de pâte qui diffèrent entre elles et de la pâte bâtarde par la quantité relative d'eau et de farine, et qui donc conduisent à la réalisation d'un pain respectivement moins hydraté, ou alors plus hydraté que le pain traditionnel.

Par exemple, le brevet FR-A-1.555.750 enseigne un procédé de fabrication d'un pain dont l'hydratation est inférieure au pain traditionnel, à partir d'une pâte dite "ferme" qui comprend en poids, pour 100 kg de farine, environ 55 kg d'eau, environ 2 kg de sel et environ 9 kg de levure.

Pour autre exemple, le brevet FR-A-2.426.413 enseigne un procédé de fabrication d'un pain à plus forte hydratation qu'un pain traditionnel, à partir d'une pâte dite "douce" qui comprend en poids, pour 100 kg de farine, de 64 à 70 kg d'eau, environ 1,7 kg de sel et environ 0,85 kg de levure.

Quelle que soit la pâte utilisée, sa préparation est le plus généralement effectuée selon la méthode dite de "travail direct", méthode selon laquelle on ajoute directement la levure à la pâte au moment du pétrissage, en vue de la fermentation future. Une telle méthode "de travail direct" est celle qui est utilisée pour fabriquer le pain hydraté conformément au brevet FR-A-2.426.413, et c'est également celle qui est utilisée pour fabriquer un autre pain surhydraté conformément au brevet EP-A-0.233.126.

Toutefois, certains boulangers soumettent au pétrissage une pâte obtenue selon une méthode moins courante, qui peut être :

– soit un travail avec du levain de pâte, consistant à prélever, dans une fournée d'une fabrication antérieure, un morceau de pâte fermentée dit "chef" qui contient de ce fait des levures sauvages et qui, après addition d'eau et de farine, mise au repos et fermentation, permettra d'assurer la fermentation du lendemain,

– soit un travail au levain-levure, avec au préalable préparation d'un levain de pâte additionnée de levure,

– soit un travail sur poolisch, avec au préalable préparation d'un levain très mou, voire liquide, dans un baquet, ou directement dans le pétrin.

Dans les trois cas précités, le levain est mêlé à la pâte proprement dite, juste avant son pétrissage, les levures ainsi apportées permettant à la pâte de lever et de fermenter.

Parmi toutes les méthodes de préparation d'une pâte qui viennent d'être résumées, celle du travail sur poolisch -lorsque assez exceptionnellement celle-ci est préconisée- se pratique de façon telle que la quantité de levain mou ou liquide représente en général 5 % et au maximum 10 % du poids total de la pâte proprement dite qui, après mélange, va être soumise au pétrissage, puis à la fermentation et enfin à la cuisson.

Par ailleurs, et ce quelle que soit la méthode de préparation de la pâte à pain, on sait que tous les procédés de panification préconisent de pétrir cette pâte pendant un temps de l'ordre de 15 à 20 minutes, le pétrin tournant alors en seconde vitesse, de l'ordre de 60 tours/minute, pour un pétrissage rapide : l'opération de pétrissage toujours conseillée consiste donc à faire tourner la cuve de pétrin pendant environ 900 à 1200 tours.

Il est également connu que, en fin de pétrissage, les différents procédés de panification recommandent tous de laisser la pâte au repos pendant au moins 2 heures 1/2, pour que la fermentation se produise et que la pâte lève. Certains boulangers toutefois divisent la pâte en cours de fermentation après 1/2 heure, c'est-à-dire après le pointage ; les pâtons ainsi divisés sont placés dans des bacs allongés, dénommés panetons, dans lesquels la pâte termine sa fermentation pendant au moins 2 heures. Après cette opération dite d'apprêt, les panetons sont placés dans un four et la pâte est ainsi soumise à la cuisson.

La présente invention a pour but de proposer la fabrication d'un pain remarquable en ce que la pâte est soumise à un pétrissage modéré, à une vitesse très lente, et pendant un temps très court. Ainsi, la pâte n'est pas ou du moins est peu oxygénée ; en outre, les composants essentiels de la pâte, et notamment le gluten de la farine, ne sont pas dénaturés, d'où l'assurance de la fabrication d'un pain exceptionnellement digeste.

Le pain obtenu selon la présente invention est également remarquable par sa caractéristique de longue conservation, sans aucun additif, cette propriété découlant du fait que la pâte n'a pas été oxygénée par un pétrissage intensif, que la mie est très hydratée, très aérée, et que la croûte qui protège cette mie est très épaisse et malgré tout très fondante.

La présente invention a donc pour premier objet un procédé de fabrication d'un pain, comportant trois opérations principales, à savoir le pétrissage, la fermentation et la cuisson, à partir d'une pâte qui, en vue de son pétrissage, est composée de farine, d'eau potable, de sel, et de levure, et qui a été obtenue par mélangeage avec une poolisch préparée au préalable, caractérisé en ce que l'on soumet au pétrissage une pâte comprenant en poids, pour 100 kg de farine, de 70 à 85 kg d'eau, de 2,4 à 3 kg de sel et de 0,2 à 0,7 kg de levure.

Avantageusement, on soumet au pétrissage une pâte comprenant en poids, pour 100 kg de farine, de 75 à 80 kg d'eau, de 2,5 à 2,8 kg de sel et de 0,3 à 0,5 kg de levure.

Selon une première préconisation de mise en oeuvre, on pétrit la pâte en faisant tourner la cuve de pétrin entre seulement 150 et 250 tours.

Dans un tel but, on pétrit avantageusement la pâte à la vitesse de rotation de la cuve du pétrin la plus lente, entre 25 et 30 tours/minute, pendant un temps de 6 à 8 minutes. Dans ce cas, on peut freiner la cuve en début de pétrissage, à une vitesse de 10 à 15 tours/minute, pendant un temps de 1,5 à 2 minutes.

Après pétrissage, il est recommandé de laisser pointer la pâte dans la cuve du pétrin, pour une première fermentation, pendant un temps de 30 à 45 minutes. En fin de cette première fermentation, on peut avantageusement faire tourner la cuve du pétrin pendant 1 à 2 tours, pour permettre le dégagement des gaz de fermentation.

Selon une autre caractéristique remarquable de mise en oeuvre du procédé selon l'invention, la poolisch préparée préalablement au pétrissage comprend en poids, pour 100 kg de farine, de 80 à 90 kg d'eau et de 0,3 à 2,2 kg de levure, et on laisse fermenter cette poolisch pendant au moins 6 heures.

A cette poolisch, de préférence dans la cuve du pétrin, on ajoute avantageusement de la farine, de l'eau potable, du sel, et éventuellement de la levure, le poids total des composants ajoutés à la poolisch représentant de 1,7 à 2,2 fois le poids de ladite poolisch. Ainsi, à 100 kg de poolisch, il peut être avantageusement proposé d'ajouter en poids de 100 à 110 kg de farine, de 65 à 110 kg d'eau et de 3,5 à 5,5 kg de sel.

La présente invention a pour deuxième objet une pâte à pain, obtenue par mélangeage avec une poolisch préparée au préalable, ladite pâte à pain étant destinée à être soumise à un pétrissage, puis à une fermentation, puis à une cuisson, pour la fabrication d'un pain, ladite pâte étant composée de farine, d'eau potable, de sel et de levure, et étant caractérisée en ce qu'elle comprend en poids, pour 100 kg de farine, de 70 à 85 kg d'eau, de 2,4 à 3 kg de sel et de 0,2 à 0,7 kg de levure. De préférence, cette pâte comprend en poids, pour 100 kg de farine, de 75 à 80 kg d'eau, de 2,5 à 2,8 kg de sel et de 0,3 à 0,5 kg de levure.

La présente invention a pour troisième objet une poolisch pour la préparation d'une pâte à pain, ladite poolisch étant composée au moins de farine, d'eau potable et de levure et étant caractérisée en ce qu'elle comprend en poids, pour 100 kg de farine, de 80 à 90 kg d'eau et de 0,3 à 2,2 kg de levure.

En quatrième lieu, la présente invention a naturellement pour objet un pain susceptible d'être obtenu par la mise en oeuvre du procédé et/ou à partir de la pâte dont les caractéristiques répondent aux définitions précitées.

Pour mieux faire comprendre les objets de la présente invention, on va décrire ci-après, à titre d'exemples purement illustratifs et non limitatifs, les compositions de poolisch et de pâte les plus significatives ainsi que les moyens de mise en oeuvre industrielle qui permettent la fabrication d'un pain présentant d'excellentes qualités de digestibilité, de goût, de fraîcheur, et de conservation.

En premier lieu, on procède à la préparation d'une poolisch excessivement liquide en mélangeant dans un baquet, à l'aide d'un fouet ou à la main, pendant un temps de l'ordre de 1 à 2 minutes, 10 kg de farine, 8 à 9 kg d'eau et 30 à 60 g de levure.

En variante, le mélangeage des trois ingrédients précités peut s'effectuer directement dans le pétrin ; dans ce cas, il est réalisé en faisant tourner le pétrin pendant environ 2 minutes, en première vitesse, c'est-à-dire à environ 2 5 tours/minute.

La farine utilisée est de la farine ordinaire, neutre, de type 55 ou 60, qui contient environ 1 % d'acide ascorbique ou 1 % de blé maltais ou 2 % de farine de fève, mais qui ne possède aucun autre additif chimique type soja, malt, lécithine de soja, ou acide ascorbique en excès.

La levure utilisée est une levure de bière, de préférence une levure du type de celle commercialisée sous le nom de Springer, ou encore l'Hirondelle, Mafa, Jalla.

Après mélangeage des ingrédients constituant la poolisch, cette dernière est laissée au repos pour fermenter pendant au moins 6 heures. C'est la phase dite de "pointage".

La préparation de la poolisch doit donc être conduite au minimum 6 heures avant le pétrissage définitif.

Après ces 6 heures de fermentation de la poolisch, on réalise le pétrissage proprement dit.

A cette fin, on ajoute à la poolisch, de préférence directement dans la cuve du pétrin, 20 kg de farine, 12 à 16 kg d'eau et 35 g de sel par litre d'eau, soit 700 à 875 g de sel. On ajoute également de 10 à 160 g de levure, et de préférence environ 100 g, étant entendu que cette levure est la même que celle qui a été utilisée pour la préparation de la poolisch.

La farine ajoutée à la poolisch avec l'eau de coulage est également celle de type 55 ou 60 qui a été utilisée lors de la préparation de la poolisch.

Le sel utilisé, ajouté à raison de 35 g/litre d'eau, cette quantité d'eau étant déterminée par addition de l'eau coulée pour la préparation de la poolisch et de l'eau coulée en vue du pétrissage de la pâte, est du sel de mer alimentaire, fin.

Dans une variante de préparation de la poolisch, la levure ajoutée à 10 kg de farine et à 8 à 9 kg d'eau est introduite à raison d'environ 160 à 220 g. Dans cette variante, il n'est pas nécessaire d'ajouter un complément de levure à la poolisch, après sa fermentation, en vue du pétrissage, ou du moins il convient de réduire l'addition de levure à 50 g pour 20 kg de farine, 12 à 16 litres d'eau et 700 à 875 g de sel.

Compte tenu des compositions alimentaires précitées, il est à noter que le poids total des ingrédients ajoutés à la poolisch juste avant pétrissage représente de 1,7 à 2,2 fois le poids de ladite poolisch. Autrement dit, la poolisch constitue en poids de l'ordre de 31 à 37 % du poids total de la pâte à pain à pétrir.

Cette pâte est excessivement liquide.

Ramenée à 100 kg de farine, la pâte qui va être soumise au pétrissage comprend en effet en poids : de 70 à 85 kg d'eau et de préférence de 75 à 80 kg d'eau, de 2,4 à 3 kg de sel et de préférence de 2,5 à 2,8 kg de sel, et de 0,2 à 0,7 kg de levure et de préférence de 0,3 à 0,5 kg de levure.

Après addition dans le pétrin du complément de pâte à la poolisch, dans la proportion de 1,7 à 2,2 fois le poids de ladite poolisch, on met en fonctionnement ledit pétrin, à sa vitesse de rotation la plus lente qui est la première vitesse, entre 25 et 30 tours/minute. On procède tout d'abord au frasage, pendant un temps de l'ordre de 1,5 à 2 minutes, en freinant la cuve, au frein ou à la main, pour que la pâte se mélange mieux, s'amalgame. Pendant ce temps de frasage, la vitesse de rotation de la cuve est de l'ordre de 10 à 15 tours/minute.

Après frasage, on relâche le frein et l'on pétrit donc la pâte à la vitesse normale de rotation correspondant à la première vitesse, c'est-à-dire entre 25 et 30 tours/minute, pendant un temps de l'ordre de 4,5 à 6 minutes, pour que toute l'opération de pétrissage, frasage compté, dure pendant un temps de l'ordre de 6 à 8 minutes.

Le procédé de panification selon l'invention se caractérise donc en premier lieu en ce que le pétrissage est excessivement modéré, à vitesse très lente d'une part, pendant un temps très court d'autre part, la cuve de pétrin tournant entre seulement 150 et 250 tours au lieu des 900 à 1200 tours recommandés selon les techniques actuelles.

Après pétrissage, le moteur de la cuve étant arrêté, on laisse pointer la pâte dans la cuve du pétrin, pour une première fermentation, pendant un temps de l'ordre de 30 à 45 minutes. En fin de cette première fermentation, on fait tourner la cuve du pétrin pendant 1 à 2 tours, pour permettre le dégagement des gaz de fermentation.

Ensuite, selon également un mode de mise en oeuvre préférentiel, on verse cette pâte pour partie fermentée dans un bac fariné de forme longue, dénommé paneton, et on laisse lever la pâte pendant un temps de l'ordre de 60 à 75 minutes. La phase totale de fermentation est donc d'une durée limitée à environ 1,5 à 2 heures.

La pâte est ensuite avantageusement renversée sur une planche, et elle est découpée en morceaux au coupe-pâte. Les morceaux sont alors placés tel quel sur le tapis du four, sans façonnage et sans lamage, et ils sont cuits avec de la buée, à 250°C, pendant 30 minutes.

En sortie de four, le pain cuit obtenu se caractérise en ce qu'il présente une croûte dorée, croustillante, mais malgré tout épaisse et fondante. Le pain est éclaté sur les côtés, naturellement, par suite de la fermentation. La mie est très aérée et elle présente de nombreuses et larges alvéoles ; cette mie est également très jaune. Le pain obtenu a un goût caractéristique, très prononcé, de noisette.

Les formulations exprimées ci-dessus, pour la préparation de la poolisch, puis pour l'addition de pâte à la poolisch fermentée en vue du pétrissage, font apparaître que la pâte à pain proprement dite, destinée à être soumise audit pétrissage, est très hydratée, même lorsqu'elle est comparée aux pâtes les plus douces employées à l'heure actuelle (pour 100 kg de farine, de 75 à 80 kg d'eau de préférence au lieu de 64 à 70 kg d'eau pour les pâtes douces).

En outre, relativement aux diverses pâtes actuellement commercialisées, la pâte à pain selon l'invention se caractérise en ce qu'elle comprend une plus grande quantité de sel (de 2,4 à 3 kg au lieu de 2 kg au maximum) et une moindre quantité de levure (de 0,2 à 0,7 kg au lieu de 0,85 kg au minimum).

Enfin, la quantité de levain liquide comprise dans la pâte proprement dite est, selon la recette proposée par l'invention, d'au moins 3 fois supérieure à la quantité conseillée dans les procédés actuels recommandant le travail sur poolisch.

Le fait que la pâte est très liquide en cours de pétrissage conjugué au fait que l'on pétrit cette pâte avec modération, à très petite vitesse, et pendant un temps bref, permet de garder intacts tous les composants essentiels de la pâte, et par suite préserve les propriétés de ces composants ; il se produit en effet peu, voire pas, d'oxygénation de la pâte pendant son pétrissage et la farine ne brûle pas, ; en conséquence, aucun constituant, notamment le gluten, n'est dénaturé.

Cette caractéristique de pauvreté, voire d'absence d'oxygénation, est aisément repérable sur le produit fini, c'est-à-dire sur le pain obtenu après cuisson.

La mie de ce pain est très jaune, puisque la pâte n'a pas été oxygénée par un pétrissage intensif, et cette mie est également très digeste puisque les composants essentiels de la farine, et notamment le gluten, ont pu être conservés intacts. La mie du pain est en outre très aérée puisque, du fait du pétrissage modéré de la pâte, il reste des gaz de fermentation à l'intérieur de cette pâte.

Le pain cuit est éclaté sur les côtés, naturellement, par suite de cette fermentation retardée. En conséquence, et puisque le pain cuit présente des dessins réalisés de façon naturelle, il est inutile, avant cuisson, de procéder à un lamage, c'est-à-dire à la réalisation d'un dessin sur la pâte à cuire, d'où un gain de temps.

Le pain cuit obtenu se caractérise également par sa croûte dorée et croustillante ; en effet, puisqu'il n'y a pas ou peu d'oxygénation de la pâte, il se produit avec retard, au cours de la cuisson, un processus chimique de fermentation lente qui se traduit par la transformation du gluten en glucose puis par celle du glucose en saccharine qui donne à la croûte cet aspect doré et croustillant.

Le pain obtenu est, sans autre additif, un pain de longue conservation, valable à la consommation pendant 10 à 15 jours ; cette propriété de longue conservation dérive sans doute du simple fait que la pâte n'a pas été oxygénée, que la croûte qui protège le pain est très épaisse et que le taux d'hydratation du pain est très important.

Par la mise en oeuvre du procédé qui vient d'être décrit, on fabrique 300 pièces de pain de 500 g environ chacune à partir d'une pâte qui, avant pétrissage, comprend 100 kg de farine, 80 kg d'eau, 2800 g de sel et 500 g de levure.

## Revendications

1. Pâte à pain obtenue par mélangeage avec une poolisch préparée au préalable, ladite pâte à pain étant destinée à être soumise à un pétrissage, puis à une fermentation, puis à une cuisson, pour la fabrication d'un pain, ladite pâte étant composée de farine, d'eau potable, de sel et de levure, caractérisée en ce qu'elle comprend en poids, pour 100 kg de farine, de 70 à 85 kg d'eau, de 2,4 à 3 kg de sel et de 0,2 à 0,7 kg de levure.

2. Pâte à pain selon la revendication 1, caractérisée en ce qu'elle comprend en poids, pour 100 kg de farine, de 75 à 80 kg d'eau, de 2,5 à 2,8 kg de sel et de 0,3 à 0,5 kg de levure.

3. Poolisch (ou levain liquide) pour la préparation d'une pâte à pain, composée de farine, d'eau potable et de levure, caractérisée en ce qu'elle comprend en poids, pour 100 kg de farine, de 80 à 90 kg d'eau et de 0,3 à 2,2 kg de levure.

4. Procédé de fabrication d'un pain, comportant trois opérations principales, à savoir le pétrissage, la fermentation et la cuisson, à partir d'une pâte qui, en vue de son pétrissage, est composée de farine, d'eau potable, de sel, et de levure et a été obtenue par mélangeage avec une poolisch préparée au préalable, caractérisé en ce que l'on soumet au pétrissage une pâte comprenant en poids, pour 100 kg de farine, de 70 à 85 kg d'eau, de 2,4 à 3 kg de sel et de 0,2 à 0,7 kg de levure.

5. Procédé selon la revendication 4, caractérisé en ce que l'on soumet au pétrissage une pâte comprenant en poids, pour 100 kg de farine, de 75 à 80 kg d'eau, de 2,5 à 2,8 kg de sel et de 0,3 à 0,5 kg de levure.

6. Procédé selon l'une quelconque des revendications 4 et 5, caractérisé en ce que l'on pétrit la pâte en faisant tourner la cuve de pétrin entre seulement 150 et 250 tours.

7. Procédé selon l'une quelconque des revendications 4 à 6, caractérisé en ce que l'on pétrit la pâte à la vitesse de rotation de la cuve du pétrin la plus lente, entre 25 et 30 tours/minute, pendant un temps de 6 à 8 minutes.

8. Procédé selon la revendication 7, caractérisé en ce que l'on freine la cuve en début de pétrissage, à une vitesse de 10 à 15 tours/minutes, pendant un temps de 1,5 à 2 minutes.

9. Procédé selon l'une quelconque des revendications 4 à 8, caractérisé en ce qu'on laisse pointer la pâte dans la cuve du pétrin, pour une première fermentation, pendant un temps de 30 à 45 minutes.

10. Procédé selon la revendication 9, caractérisé en ce que, en fin de cette première fermentation, on fait tourner la cuve du pétrin pendant un à deux tours, pour permettre le dégagement des gaz de fermentation.

11. Procédé selon l'une quelconque des revendications 4 à 10, caractérisé en ce que, préalablement au pétrissage, on prépare un levain liquide ou poolisch comprenant en poids, pour 100 kg de farine, de 80 à 90 kg d'eau et de 0,3 à 2,2 kg de levure et en ce qu'on laisse fermenter cette poolisch pendant au moins 6 heures.

12. Procédé selon la revendication 11, caractérisé en ce que, à cette poolisch, et de préférence dans la cuve du pétrin, on ajoute de la farine, de l'eau potable, du sel, et éventuellement de la levure, le poids total des composants ajoutés à la poolisch représentant de 1,7 à 2,2 fois le poids de ladite poolisch.

13. Procédé selon l'une quelconque des revendications 11 et 12, caractérisé en ce que, à 100 kg de poolisch, on ajoute en poids de 100 à 110 kg de farine, de 65 à 110 kg d'eau et de 3,5 à 5,5 kg de sel.

## Patentansprüche

1. Brotteig, der durch Mischen mit einem zuvor zubereiteten flüssigen Ferment erhalten wurde und der dazu bestimmt ist, einer Knetung, anschließend einer Gärung und dann einem Backvorgang zur Herstellung eines Brots unterworfen zu werden, bestehend aus Mehl, Trinkwasser, Salz und Hefe, **dadurch gekennzeichnet,** daß er in Gewichtsanteilen auf 100 kg Mehl 70 bis 85 kg Wasser, 2,4 bis 3 kg Salz und 0,2 bis 0,7 kg Hefe enthält.

2. Brotteig nach Anspruch 1, **dadurch gekennzeichnet,** daß er in Gewichtsanteilen auf 100 kg Mehl 75 bis 80 kg Wasser, 2,5 bis 2,8 kg Salz und 0,3 bis 0,5 kg Hefe enthält.

3. Flüssiges Ferment (oder flüssiges Treibmittel) für die Zubereitung eines Brotteiges, das aus Mehl, Trinkwasser und Hefe besteht, **dadurch gekennzeichnet,** daß es in Gewichtsanteilen auf 100 kg Mehl 80 bis 90 kg Wasser und 0,3 bis 2,2 kg Hefe enthält.

4. Verfahren sur Herstellung eines Brotes, das drei Hauptstufen enthält, nämlich das Kneten, das Gären und das Backen, aus einem Teig, der im Hinblick auf sein kneten aus Mehl, Trinkwasser, Salz und Hefe besteht und eine Vermischung mit einem flüssigen Ferment erfahren hat, das zuvor zubereitet worden ist, **dadurch gekennzeichnet,** daß man dem Knetvorgang einen Teig zuführt, der in Gewichtsanteilen auf 100 Kg Mehl 70 bis 85 kg Wasser, 2,4 bis 3 kg Salz und 0,2 bis 0,7 kg Hefe enthält.

5. Verfahren nach Anspruch 4, **dadurch gekennzeichnet,** daß man dem Knetvorgang eine Teig zuführt, der in Gewichtsanteilen auf 100 kg Mehl 75 Dis 80 kg Wasser, 2,5 bis 2,8 kg Salz und 0,3 bis 0,5 kg Hefe enthält.

6. Verfahren nach einem der Ansprüche 4 und 5, **dadurch gekennzeichnet,** daß man den Teig knetet, indem man den Knettrog mit nur 150 bis 250 Umdrehungen laufen läßt.

7. Verfahren nach einem der Ansprüche 4 bis 6, **dadurch gekennzeichnet,** daß man den Teig mit der langsamsten Drehzahl des Knettroges zwischen 25 und 30 Umdrehungen/Minute während einer Zeit von 6 bis 8 Minuten knetet.

8. Verfahren nach Anspruch 7, **dadurch gekennzeichnet,** daß man den Trog zu Beginn des Knetvorgangs auf eine Geschwindigkeit von 10 bis 15 Umdrehungen/Minute während einer Zeit von 1,5 bis 2 Minuten bremst.

9. Verfahren nach einem der Ansprüche 4 bis 8, **dadurch gekennzeichnet,** daß man den Teig in dem knettrog für eine erste Gärung Während einer Zeit von 30 bis 45 Minuten aufgehen läßt.

10. Verfahren nach Anspruch 9, **dadurch gekennzeichnet,** daß am Ende dieser erste Gärung man den Knettrog ein- bis zweimal umlaufen läßt, um Gärgase entweichen zu lassen

11. Verfahren nach einem der Ansprüche 4 bis 10, **dadurch gekennzeichnet,** daß man vor dem Kneten ein flüssiges Treibmittel oder ein flüssiges Ferment zubereitet, das in Gewichtsanteilen für 100 kg Mehl 80 bis 90 kg Wasser und 0,3 bis 2,2 kg Hefe enthält und daß man dieses flüssige Ferment während wenigstens 6 Stunden gären läßt.

12. Verfahren nach Anspruch 11, **dadurch gekennzeichnet,** daß man zu diesem flüssigen Ferment und vorzugsweise in den Knettrog Mehl, Trinkwasser, Salz und gegebenenfalls Hefe hineingibt, wobei das Gesamtgewicht der dem flüssigen Ferment zugegebenen Bestandteile das 1,7- bis 2,2-fache des genannten flüssigen Ferments ausmacht.

13. Verfahren nach einem der Ansprüche 11 und 12, **dadurch gekennzeichnet,** daß man auf 100 kg flüssiges Ferment in Gewichtsanteilen 100 bis 110 kg Mehl, 65 bis 110 kg Wasser und 3,5 bis 5,5 kg Salz zugibt.

## Claims

1. Bread dough obtained by mixing with a previously prepared liquid leaven, the said bread dough being intended to be subjected to kneading, then to fermentation, then to baking, for the manufacture of a loaf, the said dough being composed of flour, potable water, salt and yeast, characterised in that it comprises, by weight, per 100 kg of flour, from 70 to 85 kg of water, from 2.4 to 3 kg of salt and from 0.2 to 0.7 kg of yeast.

2. Bread dough according to Claim 1, characterised in that it comprises, by weight, per 100 kg of flour, from 75 to 80 kg of water, from 2.5 to 2.8 kg of salt and from 0.3 to 0.5 kg of yeast.

3. Liquid leaven for the production of a bread dough, composed of flour, potable water and yeast, characterised in that it comprises, by weight, per 100 kg of flour, from 80 to 90 kg of water and from 0.3 to 2.2 kg of yeast.

4. Method for the manufacture of a loaf, comprising three principal operations, which are kneading, fermentation and baking, starting from a dough which, for the purposes of kneading thereof, is composed of flour, potable water, salt and yeast and has been obtained by mixing with a previously prepared liquid leaven, characterised in that a dough is subjected to kneading which comprises, by weight, per 100 kg of flour, from 70 to 85 kg of water, from 2.4 to 3 kg of salt and from 0.2 to 0.7 kg of yeast.

5. Method according to Claim 4, characterised in that a dough is subjected to kneading which comprises, by weight, per 100 kg of flour, from 75 to 80 kg of water, from 2.5 to 2.8 kg of salt and from 0.3 to 0.5 kg of yeast.

6. Method according to either of Claims 4 and 5, characterised in that the dough is kneaded by rotating the kneading trough through only between 150 and 250 revolutions.

7. Method according to any one of Claims 4 to 6, characterised in that the dough is kneaded at the slowest speed of rotation of the trough of the kneader, between 25 and 30 revolutions/minute, during a period of from 6 to 8 minutes.

8. Method according to Claim 7, characterised in that the trough is slowed at the start of kneading, to a speed of 10 to 15 revolutions/minute, during a period of from 1.5 to 2 minutes.

9. Method according to any one of Claims 4 to 8, characterised in that the dough is allowed to ferment in the trough of the kneader, for a first fermentation, during a period of from 30 to 45 minutes.

10. Method according to Claim 9, characterised in that, at the end of this first fermentation, the trough of the kneader is rotated through one or two revolutions in order to allow the release of the fermentation gasses.

11. Method according to any one of Claims 4 to 10, characterised in that, prior to kneading, a liquid leaven is prepared which comprises, by weight, per 100 kg of flour, from 80 to 90 kg of water and from 0.3 to 2.2 kg of yeast, and that this liquid leaven is allowed to ferment for at least 6 hours.

12. Method according to Claim 11, characterised in that there is added to this liquid leaven, and preferably in the trough of the kneader, flour, potable water, salt and, optionally, yeast, the total weight of the components added to the liquid leaven representing from 1.7 to 2.2 times the weight of the said leaven.

13. Method according to either of Claims 11 and 12, characterised in that there is added, to 100 kg of liquid leaven, by weight, from 100 to 110 kg of flour, from 65 to 110 kg of water and from 3.5 to 5.5 kg of salt.